# EUROPEAN PATENT APPLICATION

(11) **EP 2 998 857 A1**
(43) Date of publication of application: **23.03.2016**
(21) Application number: 14818720.6
(22) Date of filing: 27.06.2014
(51) Int. Cl.: G06F 3/14

(54) **CONTROL METHOD AND DEVICE FOR DISPLAYING SCREEN BACKGROUND**

(30) Priority: 28.06.2013 CN 201310269606
(71) Applicant: Huawei Technologies Co., Ltd., Longgang District Shenzhen, Guangdong 518129 (CN)
(72) Inventor: YANG, Fen, Shenzhen, Guangdong 518129 (CN)
(74) Representative: Goddar, Heinz J.
(86) International application number: PCT/CN2014/080905
(87) International publication number: WO 2014/206328

(57) **Abstract**

Embodiments of the present invention disclose a method and an apparatus for controlling display of a screen background, where a screen background is separately set for each screen, so as to display a screen background according to the setting, thereby improving user experience. The method includes: acquiring a screen identifier of a to-be-set screen, where the to-be-set screen is a main screen, a lock screen, or any subscreen; determining a to-be-used template of the to-be-set screen, and acquiring template configuration information of the to-be-used template, where the template configuration information includes a template identifier; determining a background file that is to be loaded and for using the to-be-used template on the to-be-set screen, and acquiring file information for loading the background file; and storing screen configuration information of the to-be-set screen, where the screen configuration information of the to-be-set screen includes the screen identifier of the to-be-set screen, the template identifier corresponding to the to-be-set screen, and the file information corresponding to the to-be-set screen.

## Description

This application claims priority to Chinese Patent Application No. 201310269606.0, filed with the Chinese Patent Office on June 28, 2013 and entitled "METHOD AND APPARATUS FOR CONTROLLING DISPLAY OF SCREEN BACKGROUND", which is incorporated herein by reference in its entirety.

### TECHNICAL FIELD

The present invention relates to the field of screen display of electronic devices, and in particular, to a method and an apparatus for controlling display of a screen background.

### BACKGROUND

A mobile communications terminal, as a tool, has become an essential part of people's work and life. A requirement of a user on the mobile communications terminal is no longer limited to communication and exchange; instead, the user wants to use the mobile communications terminal in work, entertainment, shopping, transaction, social activities, business, and the like. Driven by market demands, more types of mobile communications terminal devices come out, and good user experience will become a main factor in competition between communications terminals.

A common mobile communications terminal provides a function of setting a screen background to a user. However, in the prior art, a mobile communications terminal (for example, a smartphone) can set a screen background only for a lock screen and a main screen, and cannot set a screen background for other subscreens. Therefore, screen background display of the subscreens can only be the same as screen background display of the main screen. As a result, the screen background display lacks variety, which is likely to cause aesthetic fatigue when the user uses the mobile communications terminal for a long time, and results in bad user experience.

### SUMMARY

Embodiments of the present invention provide a method and an apparatus for controlling display of a screen background, in which a screen background can be separately set for each screen, thereby improving user experience.

To achieve the above objective, the following technical solutions are used in the embodiments of the present invention.

According to a first aspect, a method for controlling display of a screen background is provided, including:
acquiring a screen identifier of a to-be-set screen, where the to-be-set screen is a main screen, a lock screen, or any subscreen;
determining a to-be-used template of the to-be-set screen, and acquiring template configuration information of the to-be-used template, where the template configuration information includes a template identifier;
determining a background file that is to be loaded and for using the to-be-used template on the to-be-set screen, and acquiring file information for loading the background file; and
storing screen configuration information of the to-be-set screen, where the screen configuration information of the to-be-set screen includes the screen identifier of the to-be-set screen, the template identifier corresponding to the to-be-set screen, and the file information corresponding to the to-be-set screen.

In a first possible implementation manner, according to the first aspect, the determining a to-be-used template of the to-be-set screen includes:
using a template, selected from a template library by a user for the to-be-set screen, as the to-be-used template of the to-be-set screen; or
using a template, customized by a user for the to-be-set screen, as the to-be-used template of the to-be-set screen; or
using a system default template as the to-be-used template of the to-be-set screen.

In a second possible implementation manner, according to the first aspect or the first possible implementation manner, the template configuration information further includes template structure information; and
the determining a background file that is to be loaded and for using the to-be-used template on the to-be-set screen includes:
using a background file, selected by the user for the to-be-set screen according to the template structure information of the to-be-used template, as the background file to be loaded; or
selecting, according to the template structure information of the to-be-used template and from at least one individual file selected by the user for all screens, the background file to be loaded; or
selecting, according to the template structure information of the to-be-used template and from a default background file library, the background file to be loaded.

In a third possible implementation manner, according to the second possible implementation manner, the selecting, according to the template structure information of the to-be-used template and from at least one individual file selected by the user for all screens, the background file to be loaded includes:
selecting, for the to-be-set screen according to the template structure information of the to-be-used template and from the at least one individual file selected by the user for all the screens, a background file, which has not been selected before, as the background file to be loaded; or
selecting, for the to-be-set screen according to the template structure information of the to-be-used template and from the at least one individual file selected by the user for all the screens, a background file, which has been selected before, as the background file to be loaded; or
selecting, for the to-be-set screen according to the template structure information of the to-be-used template and from the at least one individual file selected by the user for all the screens, background files, one part of which has been selected before and the other part has not been selected before, as background files to be loaded.

In a fourth possible implementation manner, according to the second possible implementation manner, the selecting, according to the template structure information of the to-be-used template and from a default background file library, the background file to be loaded includes:
selecting, for the to-be-set screen according to the template structure information of the to-be-used template and from the default background file library, a background file, which has not been selected before, as the background file to be loaded; or
selecting, for the to-be-set screen according to the template structure information of the to-be-used template and from the default background file library, a background file, which has been selected before, as the background file to be loaded; or
selecting, for the to-be-set screen according to the template structure information of the to-be-used template and from the default background file library, background files, one part of which has been selected before and the other part has not been selected before, as background files to be loaded.

In a fifth possible implementation manner, according to any one of the second to fourth possible implementation manners, the screen configuration information of the to-be-set screen further includes the template structure information corresponding to the to-be-used template.

In a sixth possible implementation manner, according to the first aspect, the file information for loading the background file includes:
if the background file that is to be loaded and for using the to-be-used template on the to-be-set screen includes a complete individual file, the file information for loading the background file includes information that indicates a storage location of the background file, or includes file content of the background file; and
if the background file that is to be loaded and for using the to-be-used template on the to-be-set screen includes a part of an individual file, the file information for loading the background file includes information that indicates a storage location of the individual file and information that indicates which part of the individual file the background file is, or includes file content of the background file.

In a seventh possible implementation manner, according to the first aspect or any one of the first six possible implementation manners, the method further includes:
determining a screen on which a background is to be loaded, and acquiring a screen identifier of the screen on which the background is to be loaded;
parsing, according to the screen identifier of the screen on which the background is to be loaded, screen configuration information of the screen on which the background is to be loaded, where the screen configuration information of the screen on which the background is to be loaded includes the screen identifier of the screen on which the background is to be loaded, a template identifier corresponding to the screen on which the background is to be loaded, and file information corresponding to the screen on which the background is to be loaded; and
loading, according to the template identifier corresponding to the screen on which the background is to be loaded and the file information corresponding to the screen on which the background is to be loaded, a background file on the screen on which the background is to be loaded.

According to a second aspect, an apparatus for controlling display of a screen background is provided, including:
a screen identifier acquiring unit, configured to acquire a screen identifier of a to-be-set screen, where the to-be-set screen is a main screen, a lock screen, or any subscreen;
a template configuration information acquiring unit, configured to determine a to-be-used template of the to-be-set screen, and acquire template configuration information of the to-be-used template, where the template configuration information includes a template identifier;
a file information acquiring unit, configured to determine a background file that is to be loaded and for using the to-be-used template on the to-be-set screen, and acquire file information for loading the background file; and
a storing unit, configured to store screen configuration information of the to-be-set screen, where the screen configuration information of the to-be-set screen includes the screen identifier of the to-be-set screen, the template identifier corresponding to the to-be-set screen, and the file information corresponding to the to-be-set screen.

A storing unit, configured to store the screen configuration information of the screen, where the screen configuration information of the screen includes a correspondence between every two of the screen identifier of the screen, the template identifier, and the file information that is required for loading the background file.

In a first possible implementation manner, according to the second aspect, when determining the to-be-used template of the to-be-set screen, the template configuration information acquiring unit is specifically configured to:
use a template, selected from a template library by a user for the to-be-set screen, as the to-be-used template of the to-be-set screen; or
use a template, customized by a user for the to-be-set screen, as the to-be-used template of the to-be-set screen; or
use a system default template as the to-be-used template of the to-be-set screen.

In a second possible implementation manner, according to the second aspect and the first possible implementation manner, the template configuration information further includes template structure information; and
when determining the background file that is to be loaded and for using the to-be-used template on the to-be-set screen, the file information acquiring unit is specifically configured to:
use a background file, selected by the user for the to-be-set screen according to the template structure information of the to-be-used template, as the background file to be loaded; or
select, according to the template structure information of the to-be-used template and from at least one individual file selected by the user for all screens, the background file to be loaded; or
select, according to the template structure information of the to-be-used template and from a default background file library, the background file to be loaded.

In a third possible implementation manner, according to the second possible implementation manner, when selecting, according to the template structure information of the to-be-used template and from the at least one individual file selected by the user for all the screens, the background file to be loaded, the file information acquiring unit is specifically configured to:
select, for the to-be-set screen according to the template structure information of the to-be-used template and from the at least one individual file selected by the user for all the screens, a background file, which has not been selected before, as the background file to be loaded; or
select, for the to-be-set screen according to the template structure information of the to-be-used template and from the at least one individual file selected by the user for all the screens, a background file, which has been selected before, as the background file to be loaded; or
select, for the to-be-set screen according to the template structure information of the to-be-used template and from the at least one individual file selected by the user for all the screens, background files, one part of which has been selected before and the other part has not been selected before, as background files to be loaded.

In a fourth possible implementation manner, according to the second possible implementation manner,
when selecting, according to the template structure information of the to-be-used template and from the default background file library, the background file to be loaded, the file information acquiring unit is specifically configured to:
select, for the to-be-set screen according to the template structure information of the to-be-used template and from the default background file library, a background file, which has not been selected before, as the background file to be loaded; or
select, for the to-be-set screen according to the template structure information of the to-be-used template and from the default background file library, a background file, which has been selected before, as the background file to be loaded; or
select, for the to-be-set screen according to the template structure information of the to-be-used template and from the default background file library, background files, one part of which has been selected before and the other part has not been selected before, as background files to be loaded.

In a fifth possible implementation manner, according to any one of the second to fourth possible implementation manners, the screen configuration information of the to-be-set screen further includes the template structure information corresponding to the to-be-used template.

In a sixth possible implementation manner, according to the second aspect, the file information, acquired by the file information acquiring unit, for loading the background file includes:
if the background file that is to be loaded and for using the to-be-used template on the to-be-set screen includes a complete individual file, the file information for loading the background file includes information that indicates a storage location of the background file, or includes file content of the background file; and
if the background file that is to be loaded and for using the to-be-used template on the to-be-set screen includes a part of an individual file, the file information for loading the background file includes information that indicates a storage location of the individual file and information that indicates which part of the individual file the background file is, or includes file content of the background file.

In a seventh possible implementation manner, according to the second aspect or any one of the first six possible implementation manners, the apparatus further includes:
a determining unit, configured to determine a screen on which a background is to be loaded, and acquire a screen identifier of the screen on which the background is to be loaded;
a parsing unit, configured to parse, according to the screen identifier of the screen on which the background is to be loaded, screen configuration information of the screen on which the background is to be loaded, where the screen configuration information of the screen on which the background is to be loaded includes the screen identifier of the screen on which the background is to be loaded, a template identifier corresponding to the screen on which the background is to be loaded, and file information corresponding to the screen on which the background is to be loaded; and
a loading unit, configured to load, according to the template identifier corresponding to the screen on which the background is to be loaded and the file information corresponding to the screen on which the background is to be loaded, a background file on the screen on which the background is to be loaded.

The embodiments of the present invention provide a method and an apparatus for controlling display of a screen background. Screen configuration information is stored to complete setting of each screen background, so that a screen background can be separately set for each screen according to the method, so as to display the set screen background for each screen according to the setting, thereby improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a schematic diagram of a method for controlling display of a screen background according to an embodiment of the present invention;
FIG. 2 is a schematic diagram of another method for controlling display of a screen background according to an embodiment of the present invention;
FIG. 3 is a schematic diagram of a template used in a method for controlling display of a screen background and a schematic diagram of a display effect after a background file is loaded on a screen according to an embodiment of the present invention;
FIG 4 is a schematic diagram of a template used in another method for controlling display of a screen background and a schematic diagram of a display effect after a background file is loaded on a screen according to an embodiment of the present invention;
FIG 5 is a schematic diagram of an apparatus for controlling display of a screen background according to an embodiment of the present invention;
FIG 6 is a schematic diagram of another apparatus for controlling display of a screen background according to an embodiment of the present invention; and
FIG. 7 is a schematic diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall full within the protection scope of the present invention.

Currently, a common electronic device may include two screens, that is, a lock screen and a main screen. Some smart electronic devices may generally include at least three screens, that is, a lock screen, a main screen, and at least one subscreen; certainly, if a user does not set a lock screen for an electronic device, the electronic device may include at least two screens, that is, a main screen and at least one subscreen.

No matter how many screens does an electronic device include, a method according to the embodiments of the present invention may be used to set a screen background for any screen included in the electronic device. The following describes methods for controlling display of a screen background according to the embodiments of the present invention in detail with reference to accompanying drawings.

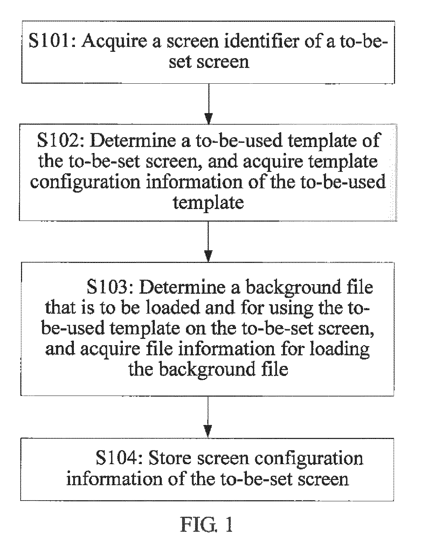

As shown in FIG. 1, a method for controlling display of a screen background provided in an embodiment of the present invention may include a plurality of steps as follows, and the steps may be executed by an electronic device.

S101. Acquire a screen identifier of a to-be-set screen.

The to-be-set screen is a main screen, a lock screen, or any subscreen, and the screen identifier refers to information that can uniquely identify the to-be-set screen.

Optionally, if the to-be-set screen is a lock screen, a unique identifier that is assigned by a system to the lock screen in advance may be used as the screen identifier of the lock screen.

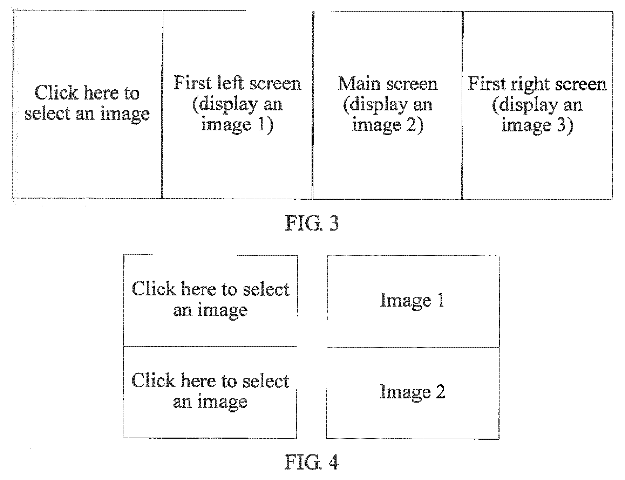

Optionally, if the to-be-set screen is a main screen or a subscreen, a unique identifier that is assigned by a system to the screen in advance may be used as the screen identifier of the screen. In addition, an inter-linking relationship may exist between the main screen and the subscreen. For example, as shown in FIG. 3, the electronic device includes three screens: a main screen, a subscreen (a first left screen) to a first left position of the main screen, and a subscreen (a first right screen) to a first right position of the main screen. Moreover, an inter-linking relationship may also exist between subscreens. For example, the electronic device includes four screens: a main screen, a subscreen to the first left position of the main screen, a subscreen to the first right position of the main screen, and a subscreen to a second right position of the main screen. For a to-be-set screen in a linking relationship with another screen, a screen identifier of the screen may be an identifier that is used to represent the linking relationship.

S102. Determine a to-be-used template of the to-be-set screen, and acquire template configuration information of the to-be-used template.

The template configuration information includes a template identifier, and may further include template structure information, where the template structure information includes a quantity of sections of each template and a layout of the sections in the template, and the layout of the sections refers to a location relationship between the sections in the template.

The template identifier refers to information that can uniquely identify the template. For example, the system may assign a unique identifier to each template as a template identifier of the template, where the quantity of sections is a total of sections included in the template, and one object needs to be correspondingly loaded on one section.

The template that needs to be used by the to-be-set screen is determined for the to-be-set screen in this step; therefore, the template identifier acquired in this step is corresponding to the screen identifier acquired in step S101.

In this step, the to-be-used template of the screen may be determined in any one of the following three optional manners.

Manner a: Use a template, selected from a template library by a user for the screen, as the to-be-used template of the screen.

The template library may include a template provided by the system. If the user customized a template, the template that is customized by the user may also be stored in the template library; therefore, the template library further includes the template that is customized by the user. Certainly, if it is allowed by the system, the user may further store a downloaded template in the template library. This manner mainly emphasizes that the user may select one template for the to-be-set screen from templates that are stored in the template library.

Manner b: Use a template, customized by a user for the screen, as the to-be-used template of the screen.

This manner mainly emphasizes that the user does not need to store a customized template in advance before setting a screen background. Instead, in a process of setting a screen, the user may customize a template for the screen to be set, and the system may store, automatically or as selected by the user, the customized template in a template library, and may further assign a unique template identifier to the customized template. It should be noted that the template identifier may also be set by the user as long as it is not the same as an existing template identifier in the system.

Manner c: Use a system default template as the to-be-used template of the screen.

This manner mainly emphasizes that a user has not selected, for the to-be-set screen, a template that is to be used by the to-be-set screen. In this case, the system may automatically configure a template (that is, the system default template) for the to-be-set screen. The system may randomly select the system default template from a template library; then, different system default templates may be selected for different to-be-set screens. The system may also use one template in the template library as the system default template; then, a system default template is the same for different to-be-set screens. However, it is not limited to the two solutions.

For example, as shown in FIG 3, a to-be-used template may be determined for each to-be-set screen according to any one of the foregoing manners, where the to-be-used template includes information such as a template identifier and a quantity of sections, which is 1.

For example, as shown in FIG. 4, a to-be-used template may be determined for one to-be-set screen according to any one of the foregoing manners, where the to-be-used template includes information such as a template identifier, a quantity of sections, which is 2, and a vertical location relationship between the sections.

S103. Determine a background file that is to be loaded and for using the to-be-used template on the to-be-set screen, and acquire file information for loading the background file.

The backgrounds file that needs to be loaded on the to-be-set screen is determined for the to-be-set screen in this step; therefore, the file information acquired in this step is corresponding to the screen identifier acquired in step S101.

The background file refers to a smallest unit of an object loaded on a screen. That is, a template used by any screen in this embodiment includes at least one section, and an object loaded on the one section is the background file.

Optionally, the background file may include a complete individual file. In this case, the file information that is required for loading the background file includes information that indicates a storage location of the background file, or includes file content of the background file. The file content of the background file may be content that can restore the background file. For example, the file content may be an image expressed by a binary code.

Optionally, the background file may also include a part of an individual file. In this case, the file information that is required for loading the background file includes information that indicates a storage location of the individual file and information that indicates which part of the individual file the background file is, or includes file content of the background file. For example, the file content may be a partial image expressed by a binary code.

One complete individual file may be an image, a flash, or the like. If the complete individual file is an image, a format thereof may be jpg, png, gif, or another commonly used image format.

In this step, the background file that is to be loaded and for using the template used on the screen may be determined in any one of the following three optional manners: manner d, manner e, and manner f.

Manner d: Use a background file, selected by the user for the screen according to the template structure information of the template, as the background file to be loaded.

This manner mainly emphasizes that information that is input by the user for screen setting includes one selected to-be-set screen and at least one background file selected for the screen. Then, when the screen background is set, the at least one background file that is selected by the user for the screen is the background file to be loaded on the screen. In this case, a quantity of background files is the same as a quantity of sections in template structure information of the screen; because a quantity of sections of the template is at least one, the quantity of background files is also at least one.

Manner e: Select, according to the template structure information of the template and from at least one individual file selected by the user for all screens, the background file to be loaded.

This manner mainly emphasizes that information that is input by the user for screen setting includes at least one individual file that is selected for all screens at one time. In this case, a background file that needs to be loaded on any screen of all the screens needs to be selected from the at least one individual file that is selected by the user for all the screens.

For example, the user may select one folder. Then, in this case, all individual files included in the folder are information that is input by the user for screen setting. In this case, the folder includes at least one individual file. Alternatively, for example, the user may also select at least one individual file from one folder or a plurality of folders as information that is input by the user for screen setting.

Specifically, the selecting, from the at least one individual file selected by the user for all screens, the background file to be loaded includes the following three optional manners: manner e1, manner e2, and manner e3.

Manner e1: Select, for the to-be-set screen according to the template structure information of the template and from the at least one individual file selected by the user for all the screens, a background file, which has not been selected before, as the background file to be loaded.

This manner mainly emphasizes that in a case in which a quantity of individual files selected by the user for all the screens is sufficient, for background setting of any to-be-set screen of all the screens, in order to improve user experience, the system selects, according to a quantity of sections in the template structure information of the to-be-set screen, background files that are of the same quantity of sections from the individual files selected by the user for all the screens, and after background setting of all the screens is completed, any screen of all the screens has a different background file that is selected by the system for the screen.

Manner e2: Select, for the to-be-set screen according to the template structure information of the template and from the at least one individual file selected by the user for all the screens, a background file, which has been selected before, as the background file to be loaded.

This manner is generally used in a case in which a quantity of individual files selected by the user for all the screens is very small.

For example, assume that the electronic device includes two to-be-set screens, a template of each screen includes two sections, and the user selects two individual files for all the screens. In this case, the system selects, for a first to-be-set screen, two non-repeated individual files as background files that are to be loaded on the first to-be-set screen. When selecting background files for a second to-be-set screen, because there is no individual file that has not been selected before, the system can only select the two individual files, which have been selected before, as background files that are to be loaded on the second to-be-set screen.

Manner e3: Select, for the to-be-set screen according to the template structure information of the template and from the at least one individual file selected by the user for all the screens, background files, one part of which has been selected before and the other part has not been selected before, as background files to be loaded.

This manner is generally used in a case in which a quantity of individual files selected by the user for all the screens is relatively small.

For example, assume that the electronic device includes two to-be-set screens, a template of each screen includes two sections, and the user selects three individual files for all the screens. In this case, the system may select, for a first to-be-set screen, two non-repeated individual files as background files that are to be loaded on the first to-be-set screen, and select, for a second to-be-set screen, one remaining individual file, which has not been selected before, and one individual file, which has been selected before, as background files that are to be loaded on the second to-be-set screen.

Manner f: Select, according to the template structure information of the template and from a default background file library, the background file to be loaded.

This manner mainly emphasizes that information that is input by the user for screen setting does not include a selected background file, and therefore, the system needs to select, from the default background file library, the background file to be loaded, where the system default background file library includes at least one individual file.

Specifically, the selecting, from a default background file library, the background file to be loaded includes the following three optional manners: manner f1, manner f2, and manner f3.

Manner f1: Select, for the to-be-set screen according to the template structure information of the template and from the default background file library, a background file, which has not been selected before, as the background file to be loaded.

This manner mainly emphasizes that in a case in which a quantity of individual files in the background file library is sufficient, for background setting of any to-be-set screen of all the screens, in order to improve user experience, the system selects, from the background file library according to the template structure information of the to-be-set screen, background files that are of the same quantity of sections. In this case, after background setting of all the screens is completed, any screen of all the screens has a different background file that is selected by the system for the any screen.

Manner f2: Select, for the to-be-set screen according to the template structure information of the template and from the default background file library, a background file, which has been selected before, as the background file to be loaded.

This manner is generally used in a case in which a quantity of individual files in a background file library is very small.

For example, assume that the electronic device includes two to-be-set screens, a template of each screen includes two sections, and the background file library has two individual files. In this case, the system selects, for a first to-be-set screen, two non-repeated individual files as background files that are to be loaded on the first to-be-set screen. When selecting background files for a second to-be-set screen, because there is no individual file that has not been selected before, the system can only select the two individual files, which have been selected before, as background files that are to be loaded on the second to-be-set screen.

Manner f3: Select, for the to-be-set screen according to the template structure information of the template and from the default background file library, background files, one part of which has been selected before and the other part has not been selected before, as background files to be loaded.

This manner is generally used in a case in which a quantity of individual files in a background file library is relatively small.

For example, assume that the electronic device includes two to-be-set screens, a template of each screen includes two sections, and the background file library has three individual files. In this case, the system selects, for a first to-be-set screen, two non-repeated individual files as background files that are to be loaded on the first to-be-set screen, and selects, for a second to-be-set screen, one remaining individual file, which has not been selected before, and one individual file, which has been selected before, as background files that are to be loaded on the second to-be-set screen.

For example, according to template structure information of a template shown in FIG. 3, an image 2 may be determined as a background file to be loaded on a to-be-set main screen, an image 1 may be determined as a background file to be loaded on a to-be-set first left screen (subscreen), and an image 3 may be determined as a background file to be loaded on a to-be-set first right screen (subscreen).

For example, according to template structure information of a template shown in FIG. 4, an image 1 and an image 2 may be determined as background files to be loaded on one to-be-set screen.

S104. Store screen configuration information of the to-be-set screen.

The screen configuration information of the to-be-set screen includes the screen identifier of the to-be-set screen, the template identifier corresponding to the to-be-set screen, and the file information corresponding to the to-be-set screen.

In other words, information obtained for one to-be-set screen by using the three steps S101 to S103 and a correspondence between the information are stored.

Because screen background setting may be completed for each screen of the electronic device by using the foregoing four steps, after setting of all screens of the electronic device is completed, a screen identifier of each screen, a template identifier corresponding to the screen identifier of the screen, and file information that is required for loading a background file and corresponding to the screen identifier of the screen are stored in the electronic device.

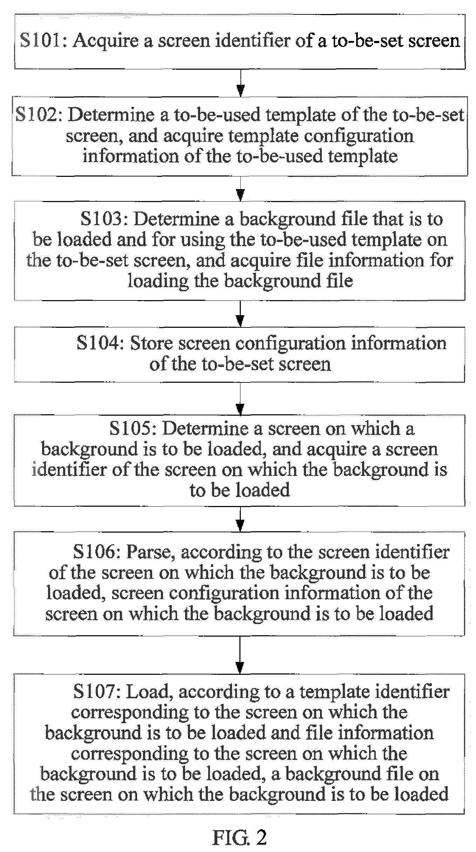

Further, as shown in FIG. 2, the method may further include:
S105. Determine a screen on which a background is to be loaded, and acquire a screen identifier of the screen on which the background is to be loaded.

For example, when the user flicks a screen, a screen displayed after the flick is the screen on which a background is to be loaded, and the system acquires the corresponding screen identifier according to this screen.

S106. Parse, according to the screen identifier of the screen on which the background is to be loaded, screen configuration information of the screen on which the background is to be loaded.

The screen configuration information of the screen on which the background is to be loaded includes the screen identifier of the screen on which the background is to be loaded, a template identifier corresponding to the screen on which the background is to be loaded, and file information corresponding to the screen on which the background is to be loaded.

If the screen configuration information does not include template structure information corresponding to the template identifier,
first, the template identifier corresponding to the screen identifier and the file information that is required for loading the background file and corresponding to the screen identifier are obtained by parsing stored screen configuration information by using the acquired screen identifier; and
then, the template configuration information of the template is acquired according to the template identifier.

If the screen configuration information includes template structure information corresponding to the template identifier,
the template identifier corresponding to the screen identifier, the file information that is required for loading the background file and corresponding to the screen identifier, and the template configuration information corresponding to the template identifier are obtained by parsing stored screen configuration information by using the acquired screen identifier.

S107. Load, according to a template identifier corresponding to the screen on which the background is to be loaded and file information corresponding to the screen on which the background is to be loaded, a background file on the screen on which the background is to be loaded.

To describe a process of displaying a screen background more intuitively, refer to FIG 3 and FIG. 4 for an exemplary description.

In a display effect diagram of screens shown in FIG. 3, after the electronic device is powered on, a screen on which a background needs to be loaded is the main screen; an image 2 is loaded on the main screen according to steps S105 to S107 and the template in FIG. 3. When the user flicks the screen to a first left screen, an image 1 is loaded on the first left screen according to steps S105 to S107 and the template in FIG. 3. When the user flicks the screen to a first right screen, an image 3 is loaded on the first right screen according to steps S105 to S107 and the template in FIG. 3.

In a display effect diagram of a screen on which a background needs to be loaded as shown in FIG. 4, images 1 and 2 may be loaded on the screen according to steps S105 to S107 and the templates in FIG. 4.

This embodiment of the present invention provides the method and apparatus for controlling display of a screen background. Screen configuration information is stored to complete setting of each screen background, so that a screen background can be separately set for each screen according to the method, so as to display the set screen background for each screen according to the setting, thereby improving user experience.

An embodiment of the present invention provides another method for controlling display of a screen background, in which screen configuration information of a screen is acquired and stored, so as to complete setting of each screen background and display the screen background according to the setting.

In the foregoing embodiment, S102 and S103 each include three implementation manners. Then, there are nine possible combinations. The following specifically describes, in an exemplary manner, methods corresponding to four combinations; methods corresponding to the other five combinations may also be implemented, but are not described repeatedly.

A first optional combination is a combination of manner c in S102 and manner e in S103. In other words, in a process of setting a screen background, a user selects only at least one background file for all screens, but does not select a corresponding template for each screen. In this embodiment, that each background file that is loaded on each screen is a complete individual file is used as example. A specific process is as follows:
First, a system may include a quick setting option; that the user selects the quick setting option means that the user wants to implement setting of all screens by performing setting once. That is, it is not necessarily to select all screens.

Then, the system provides an option that requires the user to select a background file. In this case, the user selects a background file for all the screens.

Two pieces of information, that is, a fact that the user selects the quick setting option and an individual file that is selected by the user for all the screens, are used as information that is input by the user for screen setting. Then, backgrounds of all the screens are set according to the information that is input by the user for the screen setting.

After the user completes inputting, the system needs to set screen backgrounds for all the screens, where the following operations need to be performed for screen setting of any screen of all the screens.

For simplicity, the any screen of all the screens is referred to as a to-be-set screen.
1. Acquire a screen identifier of a to-be-set screen through S101, where the any screen is corresponding to a unique screen identifier.
2. Acquire, through S102, template configuration information of a template that is used by the to-be-set screen.
   Because the user has not assigned a template in this case, a system default template is used as the template to be used by the screen.
3. Acquire, through S103, file information that is required for loading the background file. Specifically, because the user selects an individual file for all the screens, a background file to be loaded needs to be selected for the to-be-set screen from the individual file that is selected by the user for all the screens.

Optionally, the background file to be loaded may be selected in any one of the foregoing three manners e1, e2, and e3.

In this embodiment, because the user has not selected a template and the system default template is used, it is possible that before selecting the individual file for all the screens, the user does not know how many individual files in total are required for selecting non-repeated background files for all the screens. However, because the template is the system default one, after the system determines the template for each to-be-set screen and before the system determines the background file for each to-be-set screen, the method may further include:
First, calculate, according to template configuration information corresponding to each to-be-set screen, a sum of sections of the template corresponding to each to-be-set screen.

The template configuration information herein is template configuration information of the system default template that is determined for each to-be-set screen. Because the template configuration information includes a quantity of sections of the template, the sum of sections of all the screens may be learned, and a total of background files required for loading two different background files on the sections may be learned.

Next, acquire a quantity of background files selected by the user for all the screens.

Then, compare the sum of sections of the template corresponding to each to-be-set screen with the quantity of background files selected by the user for all the screens.

If the quantity of individual files selected by the user for all the screens is greater than or equal to the sum of sections of the template that is used by each to-be-set screen, in other words, the individual files selected by the user are sufficient for loading a different background file for each section of all the screens, preferably, a background file to be loaded may be selected by using manner e1 of S103. In this case, background files that are loaded on the sections are different. Certainly, the background file to be loaded may also be selected by using manner e2 or e3 of S103 according to a requirement of the user.

If the quantity of individual files selected by the user for all the screens is less than the sum of sections of the template that is used by each to-be-set screen, in other words, the individual files selected by the user are insufficient for loading a different background file for each section of all the screens, optionally, a background file to be loaded may be selected by using manner e2 or e3 of S103.

Alternatively and optionally, for any to-be-set screen, the background file to be loaded may be selected in the following two manners for the to-be-set screen from the individual files selected by the user for all the screens:
if the quantity of individual files selected by the user for all the screens is greater than or equal to the quantity of sections of the template that is used by the to-be-set screen, exemplarily, a non-repeated individual file may be selected, in sequence or randomly from the individual files selected by the user for all the screens, as the background file of the to-be-set screen; and
if the quantity of individual files selected by the user for all the screens is less than the quantity of sections of the template that is used by the to-be-set screen, exemplarily, individual files, of which some are repeated and the others are not repeated or all of which are repeated, may be selected, in sequence or randomly from the individual files that are selected by the user for all the screens, as the background files of the to-be-set screen.

Because the background files selected by the user for all the screens are complete individual files, file information that is required for loading the background file includes information that indicates a storage location of the background file, or file content of the background file.

4. Store screen configuration information of the to-be-set screen through S104, where the screen configuration information of the to-be-set screen includes the identifier of the to-be-set screen, template configuration information corresponding to the identifier of the to-be-set screen, and file information corresponding to the identifier of the to-be-set screen.

It should be noted that the template configuration information includes the template identifier and the quantity of sections of the template. Exemplarily, the template configuration information may be stored in a template configuration file, and exemplarily, may be stored in the following two manners:
A first manner for storing the template configuration information: the template configuration information may be separately stored according to different template identifiers, so as to distinguish the template configuration information corresponding to the templates. For example, a template configuration file whose template identifier is 0 may be named as templet0_config.xml, and a template configuration file whose template identifier is 1 may be named as templet1_config.xml.

If the template configuration information is stored in this manner, when the user customizes a new template, the system needs to assign, to the new template, a template identifier N that is different from those of existing templates in a template library, and then create a new template configuration file templetN_config.xml for the template N. Assume that a quantity of sections of the user-customized template N is M, N and M or M is stored in templetN_config.xml.

A second manner for storing the template configuration information: a template configuration file, for example, templet_conig.xml, stores identifiers of all templates in a template library and a quantity of sections of a template corresponding to a template identifier.

If the template configuration information is stored in this manner, when the user customizes a new template, the system needs to assign, to the new template, a template identifier N that is different from those of existing templates in the template library. Assume that a quantity of sections of the user-customized template N is M, the system opens templet_config.xml in a manner of writing to the end of the file, and stores N and M correspondingly in templet_config.xml.

It should be noted that for any to-be-set screen, optionally, the screen configuration information of the to-be-set screen may be stored by generating a configuration file, or optionally, the screen configuration information of the to-be-set screen may be stored in a table of an embedded database.

For example, if a screen configuration file is used to store the screen configuration information of the screen, optionally, the screen configuration information of the screen may be separately stored according to different screen identifiers, so as to distinguish the screen configuration information corresponding to the screens. For example, a screen configuration file whose screen identifier is 0 may be named as screen0_config.xml, and a screen configuration file whose screen identifier is 1 may be named as screen1_config.xml.

For example, the screen configuration file screen0_config.xml is described as follows:
Assume that a template whose template identifier is 1 is used, and a quantity of sections of the template is 1, one background file needs to be loaded.

```
           <screen>
                 /* A template identifier and file information that correspond to a screen whose
                 screen identifier is 0 */
                <screenid>0</screenid> /* The screen identifier is 0 */
                <templetid>1</templetid> /* The template identifier corresponding to the screen
                whose screen identifier is 0 is 1 */
           <imageur/>/img/cat1.jpg</imageurl> /* The file information corresponding to the screen
           whose screen identifier is 0 is cat1.jpg */
             </screen>
```

Optionally, screen configuration information of all the screens may also be stored in one screen configuration file, for example, screen_config.xml. Exemplarily, screen_config.xml is described as follows:

```
           <screen>
                 /* A template identifier and file information that correspond to a screen whose
                 screen identifier is 0 */
                <screenid>0</screenid> /* The screen identifier is 0 */
                <templetid>1</templetid> /* The template identifier corresponding to the screen
                whose screen identifier is 0 is 1 */
           <imageurl>/img/cat1.jpg</imageurl> /* Storage location information of a background
           file corresponding to the screen whose screen identifier is 0 */
                 /* A template identifier and file information that correspond to a screen whose
                 screen identifier is 1 */
           <screenid>1</screenid>
                <templetid>1</templetid>
                <imageur1>/img/cat2.jpg</imageur1>
           /* A template identifier and file information that correspond to a screen whose screen
           identifier is 2 */
           <screenid>2</screenid>
                <templetid> 1 </templetid>
                <imageur1>/img/cat3.jpg</imageur1>
           </screen>
```

A second optional combination is a combination of manner a in S102 and manner e in S103. In other words, in a process of setting a screen background, a user may complete setting of all screens by using single input. In this embodiment, that each background file that is loaded on each screen is a part of an individual file is used as an example.

A difference between a method corresponding to the second optional combination and the method of the first optional combination lies in that:
Assume that a template identifier of a template that is selected from a template library by a user for the screen is 1, and a quantity of sections is 1; generally, in this case, the user selects only one individual file. Therefore, when selecting a background file for all screens, the user not only selects the individual file, but also indicates information about which part of the individual file a background file of each screen is. That is, file information that is required for loading the background file includes information that indicates a storage location of the individual file and information that indicates which part of the individual file the background file is, or includes file content of the background file.

When screen configuration information of a to-be-set screen is stored through S104, exemplarily, if a storage manner in which screen configuration information of all screens is stored in one screen configuration file, for example, screen_config.xml, is used, screen_config.xml is described as follows:

```
           <screen>
           /* A template identifier and file information that correspond to a screen whose screen
           identifier is 0 */
                <screenid>0</screenid> /* The screen identifier is 0 */
                <templetid>1</templetid> /* The template identifier corresponding to the screen
                whose screen identifier is 0 is 1 */
           <imageurl>/img/catl.jpg</imageurl> /* Storage location information of a background
           file corresponding to the screen whose screen identifier is 0 */
           <imagepct>0.3</ imagepct > /* Information of a part of the background file
           corresponding to the screen whose screen identifier is 0 */
           /* A template identifier and file information that correspond to a screen whose screen
           identifier is 1 */
                <screenid> 1 </screened>
                <templetid> 1 </templetid>
           <imageur1>/img/cat1.jpg</imageur1>
           <imagepct>0.3</imagepct>
           /* A template identifier and file information that correspond to a screen whose screen
           identifier is 2 */
           <screenid>2</screenid>
                <templetid>1</templetid>
           <imageurl>/img/cat1.jpg</imageur1>
           <imagepct>0.4</imagepct >
           </screen>
```

Except the foregoing difference, a processing method of the other parts is same as a processing method of the first optional combination, which is not described repeatedly in this embodiment.

A third optional combination is a combination of manner a in S102 and manner d in S 103. In other words, in a process of setting a screen background, a user may complete setting of one selected screen by using single input. In this embodiment, that a background file to be loaded on the selected screen is a complete individual file is used as an example.

The user selects one screen to be set, selects a template from a template library for the screen, and selects a background file for the screen according to the selected template, where the three pieces of information are information that is input by the user for screen setting; then, a background of the screen is set according to the information that is input by the user for the screen setting.

Specifically, the following operations need to be performed to set the background of the one screen that is selected by the user and that is to be set:
For simplicity, the one screen that is selected by the user and that is to be set is referred to as a to-be-set screen.
   1. Acquire a screen identifier of a to-be-set screen through S 101.
   2. Acquire, through S102, template configuration information of a template that is used by the to-be-set screen. In this case, a template that is selected by the user for the screen from a template library is used as a to-be-used template of the screen.
   3. Acquire, through S103, file information that is required for loading the background file. In this case, the background file that is selected by the user for the screen according to the template is used as a background file to be loaded.
   4. Store screen configuration information of the to-be-set screen through S104.

A fourth optional combination is a combination of manner a in S102 and manner f in S103. In other words, in a process of setting a screen background, a user may complete setting of one screen by using single input. In this embodiment, that a background file that is loaded on a selected screen is a complete individual file is used as an example.

The user selects one screen to be set, and selects a template from a template library for the screen, where the two pieces of information are information that is input by the user for screen setting; then, a background of the screen is set according to the information that is input by the user for the screen setting.

Specifically, the following operations need to be performed to set the background of the one screen that is selected by the user and that is to be set:
For simplicity, the one screen that is selected by the user and that is to be set is referred to as a to-be-set screen.
   1. Acquire a screen identifier of a to-be-set screen through S101.
   2. Acquire, through S102, template configuration information of a template that is used by the to-be-set screen. In this case, a template that is selected by the user for the screen from a template library is used as a to-be-used template of the screen.
   3. Acquire, through S103, file information that is required for loading the background file. In this case, because the user has not selected a background file, a background file to be loaded is selected from a default background file library according to configuration information of the template.
      Optionally, the background file to be loaded may be selected in any one of the foregoing three manners f1, f2, and f3.
      If a quantity of individual files in the default background file library is, by default, greater than or equal to a quantity of sections of the template that is used by the to-be-set screen, preferably, the background file to be loaded may be selected by using manner f1 in S103, or optionally, the background file to be loaded may be selected by using manner f2 or f3 in S103.
      If a quantity of individual files in the background file library is, by default, less than a quantity of sections of the template that is used by the to-be-set screen, optionally, the background file to be loaded may be selected by using manner f2 or f3 in S103.
   4. Store screen configuration information of the to-be-set screen through S104.

Optionally, in any combination of the foregoing four combinations, the method may further include S105 to S107, so as to complete displaying of the screen background.

This embodiment of the present invention provides the method for controlling display of a screen background. Screen configuration information is stored to complete setting of each screen background, so that a screen background can be separately set for each screen according to the method, so as to display the set screen background for each screen according to the setting, thereby improving user experience.

An embodiment of the present invention further provides an apparatus 30 for controlling display of a screen background. Functional modules of the apparatus can execute corresponding steps described above. Reference may be made to the method embodiment for a description of each functional module, and details are not described repeatedly in this embodiment. The apparatus for controlling display of a screen background may be a terminal, for example, a terminal device such as a mobile phone, a tablet computer, a notebook computer, a UMPC (ultra-mobile personal computer, ultra-mobile PC), a netbook (netbook), or a PDA (personal digital assistant, personal digital assistant).

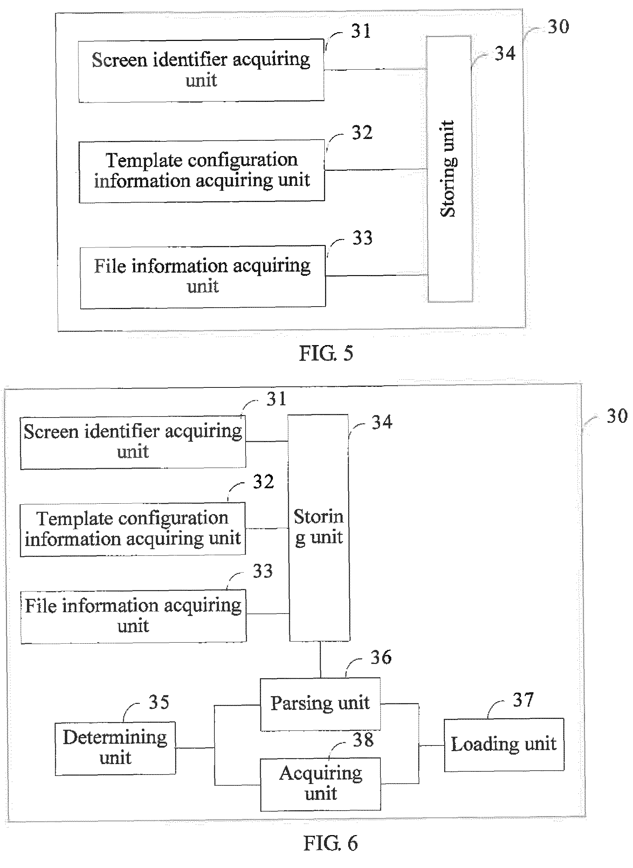

As shown in FIG. 5, the apparatus 30 includes:
a screen identifier acquiring unit 31, configured to acquire a screen identifier of a to-be-set screen, where the to-be-set screen is a main screen, a lock screen, or any subscreen;
a template configuration information acquiring unit 32, configured to determine a to-be-used template of the to-be-set screen, and acquire template configuration information of the to-be-used template, where the template configuration information includes a template identifier;
a file information acquiring unit 33, configured to determine a background file that is to be loaded and for using the to-be-used template on the to-be-set screen, and acquire file information for loading the background file; and
a storing unit 34, configured to store screen configuration information of the to-be-set screen, where the screen configuration information of the to-be-set screen includes the screen identifier of the to-be-set screen, the template identifier corresponding to the to-be-set screen, and the file information corresponding to the to-be-set screen.

Specifically, when determining the to-be-used template of the to-be-set screen, the template configuration information acquiring unit is specifically configured to:
use a template, selected from a template library by a user for the to-be-set screen, as the to-be-used template of the to-be-set screen; or
use a template, customized by a user for the to-be-set screen, as the to-be-used template of the to-be-set screen; or
use a system default template as the to-be-used template of the to-be-set screen.

The template configuration information further includes template structure information.

When determining the background file that is to be loaded and for using the to-be-used template on the to-be-set screen, the file information acquiring unit is specifically configured to:
use a background file, selected by the user for the to-be-set screen according to the template structure information of the to-be-used template, as the background file to be loaded; or
select, according to the template structure information of the to-be-used template and from at least one individual file selected by the user for all screens, the background file to be loaded; or
select, according to the template structure information of the to-be-used template and from a default background file library, the background file to be loaded.

When selecting, according to the template structure information of the to-be-used template and from the at least one individual file selected by the user for all the screens, the background file to be loaded, the file information acquiring unit is specifically configured to:
select, for the to-be-set screen according to the template structure information of the to-be-used template and from the at least one individual file selected by the user for all the screens, a background file, which has not been selected before, as the background file to be loaded; or
select, for the to-be-set screen according to the template structure information of the to-be-used template and from the at least one individual file selected by the user for all the screens, a background file, which has been selected before, as the background file to be loaded; or
select, for the to-be-set screen according to the template structure information of the to-be-used template and from the at least one individual file selected by the user for all the screens, background files, one part of which has been selected before and the other part has not been selected before, as background files to be loaded.

When selecting, according to the template structure information of the to-be-used template and from the default background file library, the background file to be loaded, the file information acquiring unit is specifically configured to:
select, for the to-be-set screen according to the template structure information of the to-be-used template and from the default background file library, a background file, which has not been selected before, as the background file to be loaded; or
select, for the to-be-set screen according to the template structure information of the to-be-used template and from the default background file library, a background file, which has been selected before, as the background file to be loaded; or
select, for the to-be-set screen according to the template structure information of the to-be-used template and from the default background file library, background files, one part of which has been selected before and the other part has not been selected before, as background files to be loaded.

The file information that is acquired by the file information acquiring unit and that is for loading the background file includes:
if the background file that is to be loaded and for using the to-be-used template on the to-be-set screen includes a complete individual file, the file information for loading the background file includes information that indicates a storage location of the background file, or includes file content of the background file; and
if the background file that is to be loaded and for using the to-be-used template on the to-be-set screen includes a part of an individual file, the file information for loading the background file includes information that indicates a storage location of the individual file and information that indicates which part of the individual file the background file is, or includes file content of the background file.

As shown in FIG. 6, the apparatus 30 may further include:
a determining unit 35, configured to determine a screen on which a background is to be loaded, and acquire a screen identifier of the screen on which the background is to be loaded;
a parsing unit 36, configured to parse, according to the screen identifier of the screen on which the background is to be loaded, screen configuration information of the screen on which the background is to be loaded, where the screen configuration information of the screen on which the background is to be loaded includes the screen identifier of the screen on which the background is to be loaded, a template identifier corresponding to the screen on which the background is to be loaded, and file information corresponding to the screen on which the background is to be loaded; and
a loading unit 37, configured to load, according to the template identifier corresponding to the screen on which the background is to be loaded and the file information corresponding to the screen on which the background is to be loaded, a background file on the screen on which the background is to be loaded.

Optionally, if the screen configuration information of the screen does not include template structure information corresponding to the template identifier, the apparatus further includes an acquiring unit 38, configured to acquire the template structure information corresponding to the template identifier according to the template identifier.

Alternatively and optionally, the screen configuration information of the to-be-set screen further includes the template structure information corresponding to the to-be-used template.

This embodiment of the present invention further provides the apparatus for controlling display of a screen background. Screen configuration information is stored to complete setting of each screen background, so that a screen background can be separately set for each screen according to the method, so as to display the set screen background for each screen according to the setting, thereby improving user experience.

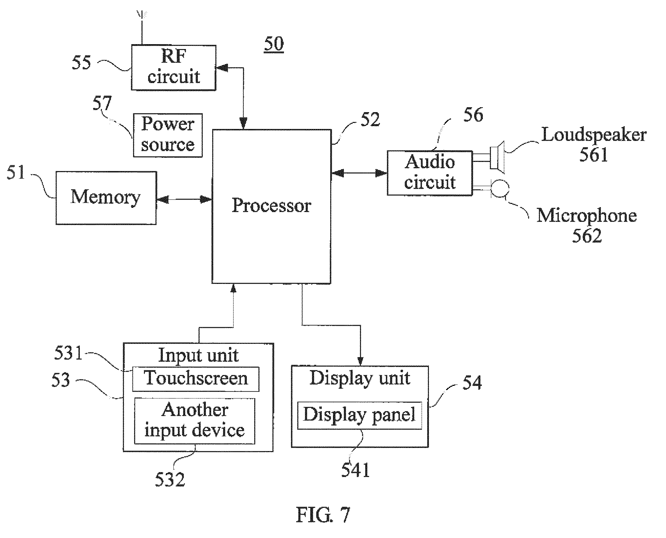

An embodiment of the present invention further provides a terminal 50, where the terminal 50 can execute the method embodiment. The terminal 50 may be a terminal device such as a mobile phone, a tablet computer, a notebook computer, a UMPC, a netbook, or a PDA. A mobile phone is used as an example for description in the following. As shown in FIG. 7, the terminal 50 includes but is not limited to:
components such as a memory 51, a processor 52 connected to the memory, an input unit 53, a display unit 54, an RF (radio frequency, radio frequency) circuit 55, an audio circuit 56, and a power source 57.

Persons skilled in the art may understand that a structure of the terminal shown in FIG. 7 does not constitute any limitation to the terminal, and the terminal may include parts fewer or more than those shown in FIG. 7, or a combination of some parts, or parts disposed differently.

The following describes the constituent parts of the terminal 50 in detail with reference to FIG. 7.

The memory 51 may be configured to store a software program and module. The processor 52 executes, by running the software program and module stored in the memory 51, functional applications and data processing of the terminal 50. The memory 51 may mainly include a program storage area and a data storage area. The program storage area may store an operating system, an application program required by at least one function (for example, a function of playing a sound, a function of playing an image, or the like), and the like. The data storage area may store data (for example, audio data, image data, an address book, and the like), and the like created according to use of the terminal 50. In addition, the memory 51 may include a high-speed random access memory, and may further include a non-volatile memory, for example, at least one disk storage component, a flash memory component, or another volatile solid state storage component.

The processor 52 is a control center of the terminal 50, connects various parts of the entire terminal by using various interfaces and lines, and executes various functions of the terminal 50 and processes data by running or executing the software program and/or module stored in the memory 51 and invoking data stored in the memory 51, so as to monitor the entire terminal.

Specifically, in this embodiment of the present invention, the processor 52 may execute the following functions: being configured to acquire a screen identifier of a to-be-set screen, where the to-be-set screen is a main screen, a lock screen, or any subscreen; determine a to-be-used template of the to-be-set screen, and acquire template configuration information of the to-be-used template, where the template configuration information includes a template identifier; determine a background file that is to be loaded and for using the to-be-used template on the to-be-set screen, and acquire file information for loading the background file; and store screen configuration information of the to-be-set screen in the memory 51, where the screen configuration information of the to-be-set screen includes the screen identifier of the to-be-set screen, the template identifier corresponding to the to-be-set screen, and the file information corresponding to the to-be-set screen. A manner in which the processor 52 acquires various information may be that: a user inputs the information by using the input unit 53, or system default information may be acquired, where the system default information may be prestored in the memory 51.

Further, the processor 52 may further execute the following functions: being configured to determine a screen on which a background is to be loaded, and acquire a screen identifier of the screen on which the background is to be loaded; parse, according to the screen identifier of the screen on which the background is to be loaded, screen configuration information of the screen on which the background is to be loaded, where the screen configuration information of the screen on which the background is to be loaded includes the screen identifier of the screen on which the background is to be loaded, a template identifier corresponding to the screen on which the background is to be loaded, and file information corresponding to the screen on which the background is to be loaded; and load, according to the template identifier corresponding to the screen on which the background is to be loaded and the file information corresponding to the screen on which the background is to be loaded, a background file on the screen on which the background is to be loaded. After the background file is loaded, the screen may be presented to the user by using the display unit 54.

Optionally, the processor 52 may include one or more processing units. Preferably, the processor 52 may integrate an application processor and a modulation and demodulation processor, where the application processor mainly processes an operating system, a user interface, an application program, and the like, and the modulation and demodulation processor mainly processes wireless communications. It may be understood that the modulation and demodulation processor also may not be integrated in the processor 52.

The input unit 53 may be configured to receive entered numeral or character information, and generate key signal input that is related to user setting and function control of the mobile phone 50. Specifically, the input unit 53 may include a touchscreen 531. and another input device 532. The touchscreen 531 is also referred to as a touch panel, and may collect a touch operation of a user on or near the touch panel (for example, an operation performed on the touchscreen 531 or near the touchscreen 531 by the user by using any proper object or attachment such as a finger or a stylus), and drive a corresponding connected apparatus according to a predefined procedure. Optionally, the touchscreen 531 may include two parts: a touch detecting apparatus and a touch controller. The touch detecting apparatus detects a touch position of the user, detects a signal caused by the touch operation, and transfers the signal to the touch controller. The touch controller receives touch information from the touch detecting apparatus, and converts the touch information into contact coordinates to send to the processor 52, and can receive and execute a command sent by the processor 52. In addition, the touchscreen 531 may be implemented in a plurality of manners, such as a resistive manner, a capacitive manner, an infrared manner, and a surface acoustic wave. Besides the touchscreen 531, the input unit 53 may further include the another input device 532. Specifically, the another input device 532 may include but is not limited to one or more of a physical keyboard, a functional key (for example, a volume control key, a power switch key, and the like), a trackball, a mouse, and an operating lever.

The display unit 54 may be configured to display information that is loaded by the processor 52 on the display unit, information that is input by the user, information that is provided to the user, and various menus of the terminal 50. The display unit 54 may include a display panel 541; optionally, the display panel 541 may be configured in a form of an LCD (Liquid Crystal Display, liquid crystal display), an OLED (Organic Light-Emitting Diode, organic light-emitting diode), or the like. Further, the touchscreen 531 may cover the display panel 541; when the touchscreen 531 detects a touch operation on or near the touchscreen 531, the touchscreen 531 transfers the touch operation to the processor 52 to determine a type of a touch event; then, the processor 52 provides corresponding visual output on the display panel 541 according to the type of the touch event. Although the touchscreen 531 and the display panel 541 implement input and input functions of the terminal 50 as two independent components in FIG. 7, in some embodiments, the touchscreen 531 and the display panel 541 may be integrated to implement the input and output functions of the terminal 50.

The RF circuit 55 may be configured to receive and send a signal in a process of information receiving and sending or of a call; particularly, the RF circuit 55 sends, after receiving downlink information from a base station, the downlink information to the processor 52 for processing, and moreover, sends designed uplink data to the base station. Generally, the RF circuit includes but is not limited to an antenna, at least one amplifier, a transceiver, a coupler, an LNA (low noise amplifier, low noise amplifier), a duplexer, and the like. In addition, the RF circuit 55 may further communicate with a network and another device by using wireless communications. The wireless communications may use any communication standard or protocol, including but not limited to GSM (global system of mobile communication, Global System for Mobile Communications), GPRS (general packet radio service, General Packet Radio Service), CDMA (code division multiple access, Code Division Multiple Access), WCDMA (wideband code division multiple access, Wideband Code Division Multiple Access), LTE (long term evolution, Long Term Evolution), Email, SMS (short messaging service, short message service), and the like.

The audio circuit 56, a loudspeaker 561, and a microphone 562 may provide an audio interface between the user and the terminal 50. The audio circuit 56 may transmit, after converting received audio data into an electrical signal, the electrical signal to the loudspeaker 561, and the loudspeaker 561 converts the electrical signal into a sound signal for outputting. On the other hand, the microphone 562 converts a collected sound signal into an electrical signal, which is received and converted by the audio circuit 56 into audio data; then, the audio data is output to the RF circuit 55, so as to be sent to, for example, another mobile phone, or the audio data is output to the memory 51 for further processing.

The terminal 50 further includes the power source 57 (for example, a battery) for supplying power to the components. Preferably, the power source may be logically connected to the processor 52 by using a power source management system, so as to implement, by using the power source management system, functions such as charging and discharging management and power consumption management.

Although not shown, the terminal 50 may further include a WiFi (wireless fidelity, wireless fidelity) module, a Bluetooth module, and the like, and details are not described repeatedly in this embodiment.

In the several embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, briefly referred to as ROM), a random access memory (Random Access Memory, briefly referred to as RAM), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the spirit and scope of the technical solutions of the embodiments of the present invention.

## Claims

1. A method for controlling display of a screen background, comprising:
acquiring a screen identifier of a to-be-set screen, wherein the to-be-set screen is a main screen, a lock screen, or any sub screen;
determining a to-be-used template of the to-be-set screen, and acquiring template configuration information of the to-be-used template, wherein the template configuration information comprises a template identifier;
determining a background file that is to be loaded and for using the to-be-used template on the to-be-set screen, and acquiring file information for loading the background file; and
storing screen configuration information of the to-be-set screen, wherein the screen configuration information of the to-be-set screen comprises the screen identifier of the to-be-set screen, the template identifier corresponding to the to-be-set screen, and the file information corresponding to the to-be-set screen.

2. The method according to claim 1, wherein the determining a to-be-used template of the to-be-set screen comprises:
using a template, selected from a template library by a user for the to-be-set screen, as the to-be-used template of the to-be-set screen; or
using a template, customized by a user for the to-be-set screen, as the to-be-used template of the to-be-set screen; or
using a system default template as the to-be-used template of the to-be-set screen.

3. The method according to claim 1 or 2, wherein the template configuration information further comprises template structure information; and
the determining a background file that is to be loaded and for using the to-be-used template on the to-be-set screen comprises:
using a background file, selected by the user for the to-be-set screen according to the template structure information of the to-be-used template, as the background file to be loaded; or
selecting, according to the template structure information of the to-be-used template and from at least one individual file selected by the user for all screens, the background file to be loaded; or
selecting, according to the template structure information of the to-be-used template and from a default background file library, the background file to be loaded.

4. The method according to claim 3, wherein the selecting, according to the template structure information of the to-be-used template and from at least one individual file selected by the user for all screens, the background file to be loaded comprises:
selecting, for the to-be-set screen according to the template structure information of the to-be-used template and from the at least one individual file selected by the user for all the screens, a background file, which has not been selected before, as the background file to be loaded; or
selecting, for the to-be-set screen according to the template structure information of the to-be-used template and from the at least one individual file selected by the user for all the screens, a background file, which has been selected before, as the background file to be loaded; or
selecting, for the to-be-set screen according to the template structure information of the to-be-used template and from the at least one individual file selected by the user for all the screens, background files, one part of which has been selected before and the other part has not been selected before, as background files to be loaded.

5. The method according to claim 3, wherein the selecting, according to the template structure information of the to-be-used template and from a default background file library, the background file to be loaded comprises:
selecting, for the to-be-set screen according to the template structure information of the to-be-used template and from the default background file library, a background file, which has not been selected before, as the background file to be loaded; or
selecting, for the to-be-set screen according to the template structure information of the to-be-used template and from the default background file library, a background file, which has been selected before, as the background file to be loaded; or
selecting, for the to-be-set screen according to the template structure information of the to-be-used template and from the default background file library, background files, one part of which has been selected before and the other part has not been selected before, as background files to be loaded.

6. The method according to any one of claims 3 to 5, wherein the screen configuration information of the to-be-set screen further comprises the template structure information corresponding to the to-be-used template.

7. The method according to claim 1, wherein the file information for loading the background file comprises:
if the background file that is to be loaded and for using the to-be-used template on the to-be-set screen comprises a complete individual file, the file information for loading the background file comprises information that indicates a storage location of the background file, or comprises file content of the background file; and
if the background file that is to be loaded and for using the to-be-used template on the to-be-set screen comprises a part of an individual file, the file information for loading the background file comprises information that indicates a storage location of the individual file and information that indicates which part of the individual file the background file is, or comprises file content of the background file.

8. The method according to any one of claims 1 to 7, further comprising:
determining a screen on which a background is to be loaded, and acquiring a screen identifier of the screen on which the background is to be loaded;
parsing, according to the screen identifier of the screen on which the background is to be loaded, screen configuration information of the screen on which the background is to be loaded, wherein the screen configuration information of the screen on which the background is to be loaded comprises the screen identifier of the screen on which the background is to be loaded, a template identifier corresponding to the screen on which the background is to be loaded, and file information corresponding to the screen on which the background is to be loaded; and
loading, according to the template identifier corresponding to the screen on which the background is to be loaded and the file information corresponding to the screen on which the background is to be loaded, a background file on the screen on which the background is to be loaded.

9. An apparatus for controlling display of a screen background, comprising:
a screen identifier acquiring unit, configured to acquire a screen identifier of a to-be-set screen, wherein the to-be-set screen is a main screen, a lock screen, or any subscreen;
a template configuration information acquiring unit, configured to determine a to-be-used template of the to-be-set screen, and acquire template configuration information of the to-be-used template, wherein the template configuration information comprises a template identifier;
a file information acquiring unit, configured to determine a background file that is to be loaded and for using the to-be-used template on the to-be-set screen, and acquire file information for loading the background file; and
a storing unit, configured to store screen configuration information of the to-be-set screen, wherein the screen configuration information of the to-be-set screen comprises the screen identifier of the to-be-set screen, the template identifier corresponding to the to-be-set screen, and the file information corresponding to the to-be-set screen.

10. The apparatus according to claim 9, wherein when determining the to-be-used template of the to-be-set screen, the template configuration information acquiring unit is specifically configured to:
use a template, selected from a template library by a user for the to-be-set screen, as the to-be-used template of the to-be-set screen; or
use a template, customized by a user for the to-be-set screen, as the to-be-used template of the to-be-set screen; or
use a system default template as the to-be-used template of the to-be-set screen.

11. The apparatus according to claim 9 or 10, wherein the template configuration information further comprises template structure information; and
when determining the background file that is to be loaded and for using the to-be-used template on the to-be-set screen, the file information acquiring unit is specifically configured to:
use a background file, selected by the user for the to-be-set screen according to the template structure information of the to-be-used template, as the background file to be loaded; or
select, according to the template structure information of the to-be-used template and from at least one individual file selected by the user for all screens, the background file to be loaded; or
select, according to the template structure information of the to-be-used template and from a default background file library, the background file to be loaded.

12. The apparatus according to claim 11, wherein when selecting, according to the template structure information of the to-be-used template and from the at least one individual file selected by the user for all the screens, the background file to be loaded, the file information acquiring unit is specifically configured to:
select, for the to-be-set screen according to the template structure information of the to-be-used template and from the at least one individual file selected by the user for all the screens, a background file, which has not been selected before, as the background file to be loaded; or
select, for the to-be-set screen according to the template structure information of the to-be-used template and from the at least one individual file selected by the user for all the screens, a background file, which has been selected before, as the background file to be loaded; or
select, for the to-be-set screen according to the template structure information of the to-be-used template and from the at least one individual file selected by the user for all the screens, background files, one part of which has been selected before and the other part has not been selected before, as background files to be loaded.

13. The apparatus according to claim 11, wherein when selecting, according to the template structure information of the to-be-used template and from the default background file library, the background file to be loaded, the file information acquiring unit is specifically configured to:
select, for the to-be-set screen according to the template structure information of the to-be-used template and from the default background file library, a background file, which has not been selected before, as the background file to be loaded; or
select, for the to-be-set screen according to the template structure information of the to-be-used template and from the default background file library, a background file, which has been selected before, as the background file to be loaded; or
select, for the to-be-set screen according to the template structure information of the to-be-used template and from the default background file library, background files, one part of which has been selected before and the other part has not been selected before, as background files to be loaded.

14. The apparatus according to any one of claims 11 to 13, wherein the screen configuration information of the to-be-set screen further comprises the template structure information corresponding to the to-be-used template.

15. The apparatus according to claim 9, wherein the file information, acquired by the file information acquiring unit, for loading the background file comprises:
if the background file that is to be loaded and for using the to-be-used template on the to-be-set screen comprises a complete individual file, the file information for loading the background file comprises information that indicates a storage location of the background file, or comprises file content of the background file; and
if the background file that is to be loaded and for using the to-be-used template on the to-be-set screen comprises a part of an individual file, the file information for loading the background file comprises information that indicates a storage location of the individual file and information that indicates which part of the individual file the background file is, or comprises file content of the background file.

16. The apparatus according to any one of claims 9 to 15, further comprising:
a determining unit, configured to determine a screen on which a background is to be loaded, and acquire a screen identifier of the screen on which the background is to be loaded;
a parsing unit, configured to parse, according to the screen identifier of the screen on which the background is to be loaded, screen configuration information of the screen on which the background is to be loaded, wherein the screen configuration information of the screen on which the background is to be loaded comprises the screen identifier of the screen on which the background is to be loaded, a template identifier corresponding to the screen on which the background is to be loaded, and file information corresponding to the screen on which the background is to be loaded; and
a loading unit, configured to load, according to the template identifier corresponding to the screen on which the background is to be loaded and the file information corresponding to the screen on which the background is to be loaded, a background file on the screen on which the background is to be loaded.
